# EUROPEAN PATENT APPLICATION

(11) **EP 4 737 831 A1**
(43) Date of publication of application: **06.05.2026**
(21) Application number: 25211461.6
(22) Date of filing: 27.10.2025
(51) Int. Cl.: F26B 3/08, F26B 3/12, F26B 3/092, B01J 8/18, B01J 8/00, B01J 8/24, B01J 19/00

(54) **FLUID BED DEVICE AND METHOD FOR MONITORING A FLUID BED DEVICE**

(30) Priority: 01.11.2024 EP 24210326
(71) Applicant: Tetra Laval Holdings & Finance S.A., 1009 Pully (CH)
(72) Inventor: Jongsma, Alfred, 8448 GW Heerenveen (NL)
(74) Representative: Tetra Pak Patent Attorneys

(57) **Abstract**

The present invention relates to a fluid bed device (100) with a vessel (102) for fluidizing particulate food material (150). The device (100) includes a temperature sensor arrangement (120) with spatially distributed temperature sensing elements (122) that monitor the spatial temperature distribution (TD1-TD7, TD1'-TD7') of the material (150). A processing device (130) acquires a time series (TS, TS') of these temperature distributions, analyzing each sensing element's (122) temporal variation (SV, SV') in temperature readings. If any temporal variation (SV, SV') exceeds a defined threshold (T), the device (100) generates a signal indicating an abnormal condition within the vessel (102). A method (300) of monitoring a fluid bed device (100) is also disclosed.

## Description

### Technical Field

The invention relates to the field of food production. More particularly, it is related to a fluid bed device. A method for monitoring a fluid bed device is also disclosed.

### Background

In dairy and food production fluidized beds (or fluid beds) are commonly used to further dry and cool powders or similar after drying in a dedicated dryer, such as in a spray dryer. To this end, a fluidized state of the powder is commonly achieved by forcing a fluid through a bulk of the powder to be dried or cooled. In a fluid bed, the powder to be dried or cooled is typically held in a so-called fluidization vessel. The powder bulk in the fluidization vessel is typically brought into a fluidized state by injecting a fluid, typically pressurized air, via fluid distributors or injectors at the bottom of the fluidization vessel. Alternatively, the powder can be brought into a fluidized state mechanically. In such a case, the fluidization vessel is typically vibrated or agitated such that the powder is brought into a fluidized state. When in a fluidized state, the powder behaves like a fluid. This means for example that lighter objects of the powder float, that the powder levels in communicating vessels level out, and the powder flows out of openings in fluidization vessel like any liquid.

In order to be able to efficiently dry or cool powder in a fluid bed, the powder needs to be maintained in a fluidized state at all times. However, the fluidized state of the powder can be compromised during certain conditions such that the powder enters into a de-fluidized state or non-fluidized state. The problem of de-fluidization is generally most pronounced when the fluid bed is used for drying powder. De-fluidization typically occurs when the particles making up the powder become too sticky. When particles of the powder stick together to form larger agglomerates the resulting agglomerates or particles become too big to be brought into a fluidized state in the fluidization vessel. The agglomerates will then sink to the bottom of the fluidization vessel. When too many of these agglomerates appear at the bottom of the fluidization vessel, the feed of pressurized air can be blocked locally and cause a de-fluidization of the powder. De-fluidization essentially means that locally, or globally, the powder is no longer in a fluidized state. If the onset of such de-fluidization is not addressed properly and quickly enough agglomerates will continue to form and build up in the fluidization vessel. When too many or too large agglomerates have accumulated in the fluidization vessel, the fluidization vessel must be cleaned. Typically, such cleaning will have to be performed manually, which is time-consuming and results in undesired and lengthy downtime of the fluid bed.

It is common practice to measure the level of moisture in the powder entering the fluid bed from e.g. a spray dryer. Such moisture measurements are typically conducted manually on a regular basis, such as once every hour. However, process variations in a dryer upstream the fluid bed can typically occur on a much shorter time base meaning that the moisture level of the powder entering the fluid be can vary and in a worst case result in a de-fluidized state of the powder in the fluidization vessel. Since the capacity of an upstream dryer is generally utilized close to its maximum, even small process variations in the dryer can lead to a de-fluidized state of the powder in the fluidization vessel of the fluid bed. For instance, a change in weather, such as a passing cold front or the daily temperature cycle, can affect the moisture level of the powder entering the fluidization vessel.

Hence, there is room for improvement when it comes to avoiding de-fluidization in a fluid bed, and consequently when it comes to reducing the need to clean the fluid bed.

### Summary

It is an objective to at least partly overcome one or more of the above-identified limitations of the prior art.

One such objective is to provide a fluid bed device in which abnormal operating conditions, such as a de-fluidized state, are detectable.

Another objective is to provide such a device in which abnormal operating conditions are detectable at an early stage.

Another objective is to provide such a device that requires less downtime for cleaning.

One or more of these objectives, as well as further objectives that may appear from the description below, are at least partly achieved by a fluid bed device, and a method for monitoring a fluid bed device according to the independent claims, embodiments thereof being defined by the dependent claims.

A first aspect relates to a fluid bed device. The device comprises a vessel configured to receive a particulate food material to be fluidized, a temperature sensor arrangement and a processing device. The temperature sensor arrangement comprises a set of spatially distributed temperature sensing elements configured to sense a spatial temperature distribution of the particulate food material. The spatial temperature distribution comprises a temperature reading of each temperature sensing element. The processing device is configured to acquire a time series of temperature distributions from the temperature sensor arrangement. The processing device is configured to determine, from the time series of temperature distributions, for each temperature sensing element, a temporal variation of the temperature readings of the respective temperature sensing element. The processing device is configured to detect whether any one of the temporal variations exceeds a threshold, and in response to detecting that at least one of the temporal variation exceeds the threshold, generate a signal indicative of an abnormal operating condition in the vessel.

Herby an improved fluid bed device is provided.

Herein, an "abnormal operating condition" may mean any undesired or less favorable condition in the vessel. Abnormal operating conditions may include fouling where particles build up on sensors or components, blockage in air supply that reduces airflow and affects fluidization, overheating which could damage the device or product and pose safety risks, sensor malfunction where faulty sensors provide inaccurate temperature data, mechanical failure from breakdowns of components like fans or motors disrupting fluidization, and air supply leakages that cause pressure imbalances and ineffective fluidization.

Herein, a "temporal variation" may be any temporal variation of the temperature readings of a respective temperature sensing element. Such temporal variation may have any cause and may emanate from a variation of a rate of particulate food material received in the vessel, a variation of a rate of air fed to the vessel, a variation of heat supplied to the particulate food material and hence the to the vessel, a variation in the type or quality of the particulate food material to give a few non-limiting examples.

By acquiring a time series of temperature distributions from a sensor arrangement having a set of spatially distributed temperature sensing elements and determining a temporal variation of the temperature readings of each sensor element, an abnormal operating condition in the vessel is detectably by detecting whether any one of the temporal variations exceeds a threshold. In this way, an abnormal operating condition in the vessel is detectable at an early stage typically, before the abnormal operating condition in the vessel is visible when observing the vessel. The fluid bed device will thus enable a reduced downtime since abnormal operating conditions are detectable for at an early stage. This because an early detection of an abnormal operating condition in the vessel can generally be compensated for or operation can be stopped prior to the abnormal operating condition in the vessel causes more severe problems resulting in downtime for e.g. cleaning of the fluid bed including the vessel.

In the following, various embodiments of the first aspect are defined. These embodiments provide at least some of the technical effects and advantages described in the foregoing, as well as additional technical effects and advantages as readily understood by the skilled person, for example in view of the following detailed description.

In some embodiments, the temporal variation may be a statistical temporal variation.

In some embodiments, the temporal variation may comprise a standard deviation, a variance, a variation in rate, a variation in magnitude, a variation in frequency, a pattern-wise variation, a trend-wise variation, a volatility or an anomaly in temperature change.

In some embodiments, the abnormal condition may correspond to a de-fluidized state of the particulate food material in at least a portion of the vessel.

Herein, a "de-fluidized state" may refer to any condition in which the particulate material within the vessel fails to remain suspended or lifted by the fluidizing medium, typically air or gas, or by mechanical agitation, typically vibration. This state is characterized by the particles settling back down to the base of the vessel rather than being evenly distributed within the vessel and in motion. De-fluidization can result from insufficient airflow, improper air velocity, equipment malfunctions, or irregularities in the particulate material itself such as clumping, excessive moisture, or inconsistent particle sizes. When a fluid bed falls into a de-fluidized state, it can lead to uneven processing, reduced heat and mass transfer efficiency, and potential quality issues with the final product.

In some embodiments, the set of spatially distributed temperature sensing elements may be arranged in the vessel and configured to extend longitudinally into fluidized particulate food material in the vessel.

In some embodiments, the set of spatially distributed temperature sensing elements may be arranged on an exterior surface of the vessel.

In some embodiments, a first subset of the set of spatially distributed temperature sensing elements may be arranged in the vessel, and a second subset of the set of spatially distributed temperature sensing elements may be arranged on an exterior surface of the vessel.

In some embodiments, the temperature sensor arrangement may comprise a fiber Bragg grating.

In some embodiments, the fiber Bragg grating may extend along a linear path or along a curved path.

In some embodiments, the temperature sensor arrangement may comprise a first fiber Bragg grating extending along a first path and a second fiber Bragg grating extending along a second path.

In some embodiments, the first and/or second path may be a linear path, extending along a horizontal plane of the vessel.

In some embodiments, the first and/or second path may be a curved path, extending along a horizontal plane of the vessel.

In some embodiments, the processing device may be further configured to adapt a control parameter of the fluid bed device in response to receiving the signal.

Herein, a "control parameter" may be any parameter used to control the operation of the fluid bed device. Thus, adaptation of a control parameter may include adaptation of various parameters including but not limited to, adjusting an airflow supplied to the vessel to correct fluidization levels, modifying a temperature setting of one or more heating elements to maintain optimal processing conditions, altering a feed rate of particulate food material to ensure consistent material flow into and out of the vessel, and changing vibration level to redistribute material and prevent clumping in the vessel.

In some embodiments, the particulate food material may be milk powder or baby formula.

A second aspect relates to a method for monitoring a fluid bed device. The fluid bed device comprises a vessel configured to receive a particulate food material to be fluidized, and a temperature sensor arrangement. The temperature sensor arrangement comprises a set of spatially distributed temperature sensing elements configured to sense a spatial temperature distribution of the particulate food material. The spatial temperature distribution comprises a temperature reading of each temperature sensing element. The method comprises acquiring, by a processing device, a time series of temperature distributions from the temperature sensor arrangement. The method comprises determining, by the processing device, from the time series of temperature distributions, for each temperature sensing element, a temporal variation of the temperature readings of the respective temperature sensing element. The method comprises detecting, by the processing device, whether any one of the temporal variations exceeds a threshold, and in response to the processing device detecting that at least one of the temporal variations exceeds the threshold, generating, by the processing device, a signal indicative of an abnormal operating condition in the vessel.

In general, features of this second aspect provide similar advantages as discussed above in relation to the first aspect. Consequently, said advantages will not be repeated in order to avoid undue repetition.

In some embodiments, the method may further comprise, adapting, by the processing device, a control parameter of the fluid bed device in response to receiving the signal.

Still other objectives, embodiments, and aspects, as well as additional features and advantages will appear from the following detailed description as well as from the accompanying schematic drawings.

### Drawings

Embodiments of the invention will now be described, by way of example, with reference to the accompanying schematic drawings, in which
Fig. 1 schematically illustrates a system for forming and drying powder including a spray dryer and a fluid bed device.
Fig. 2 is a diagram illustrating a time series of temperature distributions of a fluid bed device during normal operating conditions of a fluid bed.
Fig. 3 is a diagram illustrating a time series of temperature distributions of a fluid bed device during abnormal operating conditions of a fluid bed.
Fig. 4 is a diagram illustrating a temporal variation in the form of a standard deviation of temperature readings during normal operations and during abnormal operating conditions of a fluid bed respectively.
Fig. 5 is a schematic flowchart of a method for monitoring a fluid bed device.

### Description

Embodiments will now be described more fully hereinafter with reference to the accompanying drawings, in which some, but not all, embodiments are shown. Indeed, the subject matter of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference numerals refer to like elements throughout.

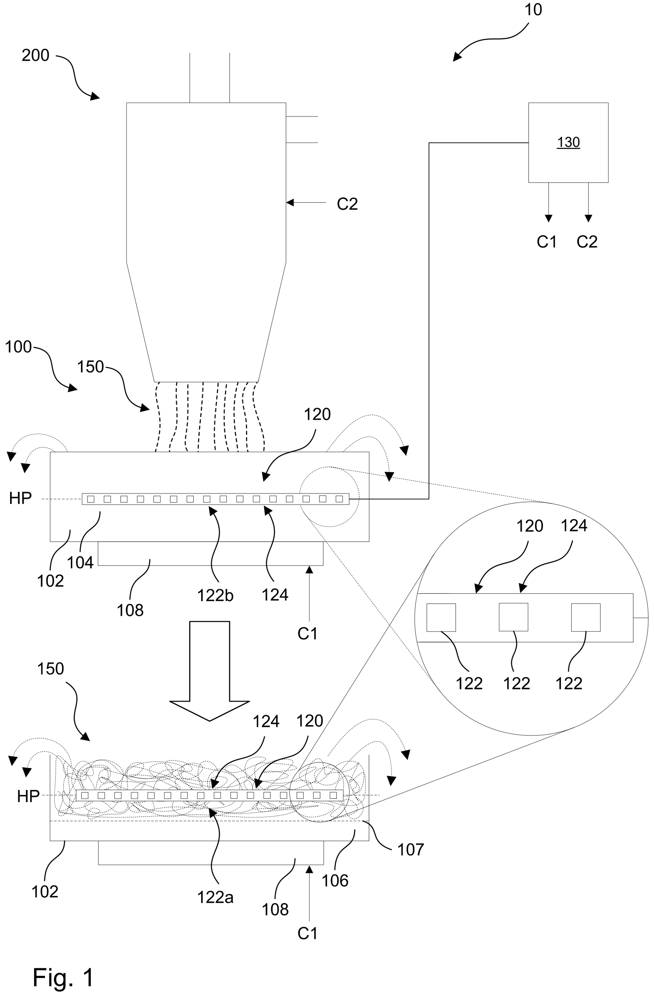

Fig. 1 is a schematic overview of an example system 10 for forming and drying powder. The system 10 includes a spray dryer 200. The spray dryer 200 is used to form a powder 150 from a food product, such as milk, which is fed to the spray dryer 200. Thus, if milk is fed to the spray dryer 200, a milk powder 150 will be formed in the spray dryer 200. In general terms, the spray dryer 200 of Fig. 1 is configured to form a particulate food material 150 from a liquid food material being fed to the spray dryer 200. Spray dryers 200 are known in the art and will consequently not be described in greater detail here.

The system 10 of Fig. 1 further includes a fluid bed device 100. The fluid bed device 100 is shown in a side view just below the spray dryer 200. Further, a cross-sectional view of the fluid bed device 100 is illustrated below. The cross-sectional view of the fluid bed device 100 is pointed out by a large arrow generally indicating the correspondence between the respective views of the fluid bed device 100.

The fluid bed device 100 comprises a vessel 102. The vessel 102 of the depicted fluid bed device 100 is formed like an open tray 102, as best illustrated in the cross-sectional view (lower illustration) of the fluid bed device 100 of Fig. 1. The vessel 102 is configured to receive the particulate food material 150 from the spray dryer 200. To this end, the particulate food material 150 is allowed to fall into the vessel 102 by means of gravity. The fluid bed device 100 is configured to fluidize the particulate food material 150. The fluid bed device 100 is further configured to dry the particulate food material 150.

Relevant examples of particulate food material 150 include milk powder and baby formula. However, other types of particulate food material 150 are also conceivable.

In order to fluidize the particulate food material 150, the fluid bed device 100 comprises a fluidization unit 108 configured to bring the particulate food material 150 into a fluidized state. The fluidization unit 108 may be of any suitable type which is capable of bringing the particulate food material 150 into a fluidized state. The fluidization unit 108 may for instance comprise a set of a nozzles configured to eject air into the vessel 102, typically from a bottom portion thereof. The fluidization unit 108 may for instance comprise one or more vibrators configured to vibrate or shake the vessel 102. The fluidization unit 108 may comprise a combination of air nozzles and vibrators.

During operation of the fluid bed device 100, the particulate food material 150 is allowed to fall into the vessel 102 from the spray dryer 200. The particulate food material 150 is then dried in the vessel 102. When the vessel 102 is full, the particulate food material 150 is allowed to overflow and fall out of the vessel 102 as generally indicated by a set of arrows in Fig. 1. Thus, in practice, during operation particulate food material 150 is constantly allowed to fall into and to overflow from the vessel 102.

The system 10 of Fig. 1 further includes a processing device 130. According to examples, the processing device 130 may include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). The processing device 130 may be cloud based or implemented in the cloud.

The processing device 130 is configured to control the spray dryer 200, e.g. by means of control signals C2. This is schematically indicated in Fig. 1 by the arrows marked C2. Further, the processing device 130 may, according to an example, receive feedback or measurements from sensors, actuators or similar of the spray dryer 200. The processing device 130 is further configured to control the fluid bed device 100, e.g. by means of control signals C1. This is schematically indicated in Fig. 1 by the arrows marked C1. Further, the processing device 130 may receive feedback or measurements from sensors, actuators or similar of the fluid bed device 100. This will be discussed in greater detail further below.

The above described parts and functions of the system 10 are commonly used in the food industry for producing particulate food material 150. However, the present Applicant has identified a potential problem with the system 10 as described above. More specifically, the Applicant has identified that it is difficult and sometimes even impossible to realize that the operating conditions of the fluid bed device 100 differs form what can be regarded as normal operating conditions before significant problems within the vessel 102 of the fluid bed device 100 have already occurred. In other words, the Applicant has realized that it is difficult and sometimes even impossible to realize when abnormal operating conditions are present in the vessel 102.

In this regard, the Applicant has realized that there may be large differences within the vessel 102 in how well the particulate food material 150 present in the vessel 102 is fluidized. In other words, the Applicant has realized that the particulate food material 150 present in the vessel 102 may be well fluidized in some locations of the vessel 102 while at the same time being less well fluidized in other locations of the vessel 102. In fact, the particulate food material 150 present in the vessel 102 may be de-fluidized in some locations of the vessel 102 while being well fluidized in a major part of the vessel 102. Moreover, the applicant has realized that there may be large variations over time. Thus, at some points in time, the particulate food material 150 present in the vessel 102 may be well fluidized while at other points in time, the particulate food material 150 present in the vessel 102 may be less well fluidized or even de-fluidized although the fluid bed device is operated using the same control parameters. The Applicant has further realized that it might be difficult and sometimes even impossible to see that the particulate food material 150 present in the vessel 102 is about to go from a fluidized state to a de-fluidized state. In other words, the applicant has realized that when the presence of a de-fluidized state of the particulate food material 150 present in the vessel 102 is visible, significant problems, typically leading to undesired downtime and cleaning, have already occurred and cannot easily be avoided or accounted for.

After significant experimentation, the Applicant has found an effective solution that may observe and detect the above identified problems at an early stage. Thus, the Applicant has found a solution which may solve or at least mitigate the above identified problems. The solution involves measurements of spatial temperature distributions in the particulate food material 150 present in the vessel 102. The solution further involves determining variations in the spatial temperature distributions. To this end, the Applicant proposes modifying the system 10 to include a temperature sensor arrangement 120 comprising a set of spatially distributed temperature sensing elements 122 as well as modifying the functionality of the processing device 130. In the following, configurations of such a temperature sensor arrangement 120 will be described. Thereafter it will be described how such a temperature sensor arrangement 120 may be utilized to observe and detect the above identified problems at an early stage by means of the processing device 130.

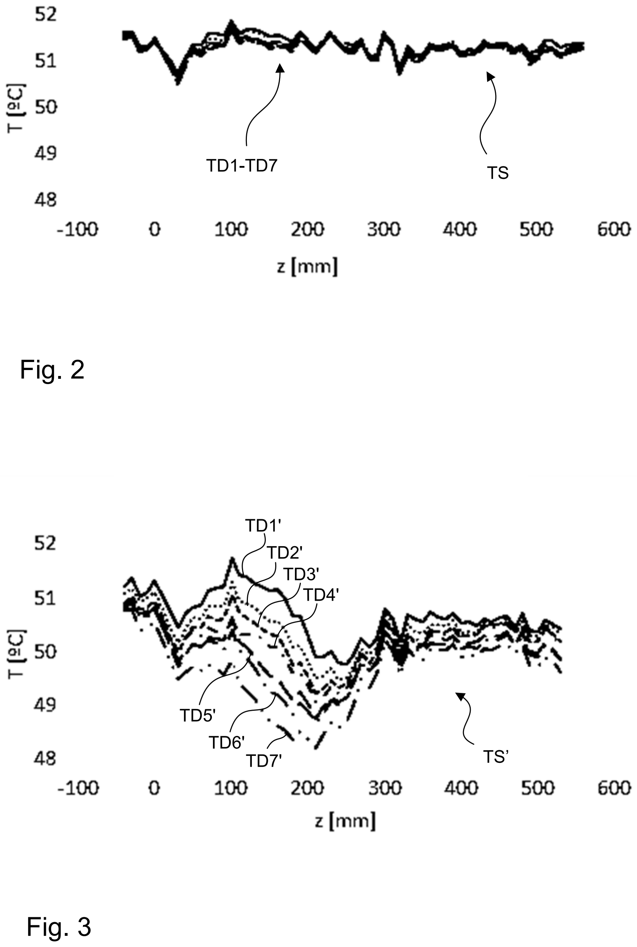

Now returning to Fig. 1. The fluid bed device 100 of Fig. 1 further comprises a temperature sensor arrangement 120. The temperature sensor arrangement 120 comprises a set of spatially distributed temperature sensing elements 122. As best illustrated in the enlarged view of Fig. 1, the spatially distributed temperature sensing elements 122 are arranged at a distance from each other. In this way, the temperature sensor arrangement 120 is configured to sense a spatial temperature distribution of the particulate food material 150 in the vessel 102. To this end, a spatial temperature distribution comprises a temperature reading of each temperature sensing element 122 of the temperature sensor arrangement 120. A time series TS of spatial temperature distributions TD1-TD7 are illustrated in Fig. 2. The X-axis of Fig. 2 represents the position along a length of the temperature sensor arrangement 120, whereas the Y-axis represents the measured temperature. The time series TS of spatial temperature distributions TD1-TD7 and the temperature distributions TD1-TD7 of Fig. 2 will be described in greater detail below.

As illustrated in the cross sectional view (lower illustration) of the fluid bed device 100 of Fig. 1, the set of spatially distributed temperature sensing elements 122 may be arranged in the vessel 102. Thus, the set of spatially distributed temperature sensing elements 122 may in this way be in direct contact with particulate food material 150 present in the vessel 102 which allows for a quick and direct response as the temperature of the particulate food material 150 changes at one or more of the temperature sensing elements 122. In other words, the set of spatially distributed temperature sensing elements 122 may as illustrated extend longitudinally into the fluidized particulate food material 150 present in the vessel 102.

Alternatively, or optionally, the set of spatially distributed temperature sensing elements 122 may be arranged on an exterior surface 104 of the vessel 102 as illustrated in the side view (upper illustration) of the fluid bed device 100 of Fig. 1. In this way, the sensing elements 122 may be prevented, or protected from directly contacting the particulate food material 150 present in the vessel 102. In this way, the sensing elements 122 may be protected form being contaminated by the particulate food material 150. As a result, the risk of the sensing elements 122 failing or otherwise becoming less accurate over time may be reduced. In other words, more robust measurements may be achieved over time when the set of spatially distributed temperature sensing elements 122 is arranged on the exterior surface 104 of the vessel 102. Further, the need for cleaning the sensing elements 122 may be eliminated or significantly reduced.

Further setups of the temperature sensor arrangement 120 and its spatially distributed sensing elements 122 are, however, feasible. For instance, some sensing elements 122a of the spatially distributed sensing elements 122 may be arranged in the vessel 102 whereas other sensing elements 122b of the spatially distributed sensing elements 122 may be arranged on the exterior surface 104 of the vessel 102, i.e. as illustrated in Fig. 1 when considering both the cross sectional view (lower illustration) and side view (upper illustration) of the fluid bed device 100. In other words, a first subset 122a of the set of spatially distributed temperature sensing elements 122 may be arranged in the vessel 102, and a second subset 122b of the set of spatially distributed temperature sensing elements 122 may be arranged on an exterior surface 104 of the vessel 102. In this way, a favorable combination of quick response and robustness over time may be achieved.

Further setups of the temperature sensor arrangement 120 and its spatially distributed sensing elements 122 may, however, be contemplated.

The depicted temperature sensor arrangement 120 of Fig. 1 comprises a fiber Bragg grating 124. It is however to be understood that any type of suitable temperature sensor arrangement 120 may be used in the fluid bed device 100. As is known in the art, a fiber Bragg grating 124 can be compared with a mirror that reflects a certain wavelength and transmits all others. By providing a plurality of such mirrors at well-defined distances, the reflected wavelengths may be controlled with very high accuracy. According to an example, such mirrors can be provided equidistantly, for a uniform fiber Bragg grating 124, or can be provided with varying distances along a grating length, resulting in a chirped fiber Bragg grating 124 where the reflected wavelength changes along the grating. The basic principle of measuring temperature with fiber Bragg gratings 124 is that the reflected wavelength depends on the grating characteristics, such as period and modulation, and is influenced by ambient conditions such as temperature. This allows for fiber Bragg gratings 124 to act as sensors for temperature. Further, when utilizing a fiber Bragg grating 124 as temperature sensors an accurate system with short response times may be realized.

In the depicted fluid bed device 100, as illustrated in Fig. 1, the temperature sensor arrangement 120, i.e. the fiber Bragg grating 124, extends along a linear path. It is, however, to be understood that the temperature sensor arrangement 120, i.e. the fiber Bragg grating 124, may extend along a curved path or a path of arbitrary shape.

Moreover, the temperature sensor arrangement 120 may optionally comprise more than one fiber Bragg grating 124, i.e. as illustrated in Fig. 1 when considering the cross sectional view (lower illustration) and the side view (upper illustration) of the fluid bed device 100 jointly. In other words, the temperature sensor arrangement 120 may comprise a first fiber Bragg grating 124 extending along a first path and a second fiber Bragg grating 124 extending along a second path. For instance, a first fiber Bragg grating 124 may be arranged in the vessel 102, and a second fiber Bragg grating 124 may be arranged on the exterior surface 104 of the vessel 102. However, more than one fiber Bragg grating 124 may be arranged in the vessel 102. Similarly, more than one fiber Bragg grating 124 may be arranged on the exterior surface 104 of the vessel 102. By arranging a desired number of fiber Bragg gratings 124 in a tailored way, the characteristics and response of the temperature sensor arrangement 120 may be tailored e.g. to suit different needs or desires.

For example, a first path of a first fiber Bragg grating 124 may be a linear path. Correspondingly, a second path of a second fiber Bragg grating 124 may be a linear path. Correspondingly, a third path of a third fiber Bragg grating 124 may be a linear path. Such linear paths may advantageously extend along a horizontal plane **HP** of the vessel 102, as illustrated in Fig. 1. It is currently believed that, by arranging the one or more fiber Bragg gratings 124 along a linear path or linear paths, similar or corresponding measurement conditions may be realized for the individual spatially distributed temperature sensing elements 122. Thus, the temperature readings of the individual spatially distributed temperature sensing elements 122 may be more stringent and hence comparable to each other which brings about a more robust temperature sensing.

According to an example, as illustrated in Fig. 1, a first subset 122a of the set of spatially distributed temperature sensing elements 122 may be comprised in a first fiber Bragg grating 124 which is arranged inside the vessel 102, and extends along a liner path within a horizontal plane HP of the vessel 102. Further, as illustrated in Fig. 1, a second subset 122b of the set of spatially distributed temperature sensing elements 122 may be comprised in a second fiber Bragg grating 124, which is arranged on the exterior surface 104 of the vessel 102 and extends along a liner path extending along a horizontal plane HP of the vessel 102.

According to another example, a first subset 122a of the set of spatially distributed temperature sensing elements 122 may be comprised in a first fiber Bragg grating 124 which is arranged inside the vessel 102, and which extends along a curved path extending along a horizontal plane HP of the vessel 102. Further, a second subset 122b of the set of spatially distributed temperature sensing elements 122 may be comprised in a second fiber Bragg grating 124, which is arranged on the exterior surface 104 of the vessel 102 and extends along a curved path extending along a horizontal plane HP of the vessel 102.

By arranging the spatially distributed temperature sensing elements 122 along a horizontal plane HP of the vessel 102 similar or corresponding measurement conditions may be realized for the individual spatially distributed temperature sensing elements 122. Thus, the temperature readings of the individual spatially distributed temperature sensing elements 122 may be more stringent and hence comparable to each other which brings about a more robust temperature sensing.

Now turning to Fig. 2. As already briefly mentioned above, Fig. 2 illustrates a time series TS of spatial temperature distributions TD1-TD7 of the particulate food material 150 present in the vessel 102. In practice the processing device 130 is configured to acquire a desired number of time series TS of temperature distributions TD1-TD7 from the temperature sensor arrangement 120.

In the following, for reasons of simplicity, each temperature distribution TD1-TD7 will be described in a context where the temperature distribution is acquired by the temperature sensing arrangement 120 being arranged in the vessel 102 of the fluid bed device 100. Thus, the set of spatially distributed temperature sensing elements 122 used for acquiring the time series TS of spatial temperature distributions TD1-TD7 depicted in Fig. 2 are all comprised in a fiber Bragg grating 124 extending along a liner path within a horizontal plane HP of the vessel 102, i.e. as illustrated in the cross-sectional view (lower illustration) of Fig. 1. It is, however, to be understood that any one or a combination of the above-described configurations of the temperature sensor arrangement 120 may be used for acquiring one or more spatial temperature distributions TD1-TD7 and hence time series TS.

More specifically, the fiber Bragg grating 124 used to acquire the spatial temperature distributions TD1-TD7, of Fig. 2, of the particulate food material 150 is formed as a 600 mm long flexible fiber or member. Further, an individual sensing element, i.e. a temperature sensing element, is provided every 10 mm along the length of the 600 mm long fiber. This means that each spatial temperature distribution TD1-TD7 comprises 60 temperature readings acquired from 60 different spatially distributed points within the vessel 102. More specifically, the time series TS of Fig. 2 is acquired from seven different spatial temperature distributions TD1-TD7 acquired by the temperature sensor arrangement 120 at seven different points in time. Thus, the time series TS of Fig. 2 includes no less than a total of 420 temperature readings distributed over seven different spatial temperature distributions TD1-TD7 each including 60 temperature readings. Further, each spatial temperature distribution TD1-TD7 is acquired with a time interval of 19,1 s. Thus, the time series TS depicted in Fig. 2 is acquired over a total period of 2 minutes and 14 seconds. As clearly illustrated in Fig. 2, the temperature of each individual temperature reading of the entire time series TS of 420 temperature readings varies within an interval between 50,5 and 52,0 degrees Celsius. Thus, all individual temperature readings of the entire time series TS vary no more than 1,5 degrees Celsius for a period of 2 minutes and 14 seconds. It is further clearly illustrated that the temperature variations along the X-axis are roughly the same. In other words, the temperature variations along the length of the fiber Bragg grating 124 are roughly the same.

The time series TS of Fig. 2, which has a maximum temperature variation of no more than 1,5 degrees Celsius for a period of 2 minutes and 14 seconds is indicative of normal operating conditions in the vessel 102. In practice, the relatively small temperature variation indicates that the particulate food material 150 is well fluidized in the vessel. Moreover, the fact that the relatively small temperature variation holds true over the total length of the fiber Bragg grating 124 used to acquire the spatial temperature distributions TD1-TD7 is indicates that the particulate food material 150 is well fluidized throughout the vessel 102. When the particulate food material 150 is well fluidized throughout the vessel 102, the heat is well distributed throughout the vessel 102, e.g. owing from the fact the particulate food material 150 is efficiently agitated and not stationary in the vessel 102.

Now turning to Fig. 3. Fig. 3 illustrates a time series TS' of spatial temperature distributions TD1'-TD7' of the particulate food material 150 present in the vessel 102. However, the time series TD' of Fig. 2 is acquired over a different time period than the time series TS of Fig. 1. Further, the time series TS' of Fig. 3 is acquired using the same temperature sensing arrangement 120 and the same time interval between the respective spatial temperature distributions TD1'-TD7'. Thus, each spatial temperature distribution TD1'-TD7' of the time series TS' of Fig. 3 comprises 60 temperature readings. Further, each spatial temperature distribution TD1'-TD7' is acquired with a time interval of 19,1 s. Thus, the time series TS' depicted in Fig. 3 is, just like the time series TS of Fig. 2, acquired over a total period of 2 minutes and 14 seconds. However, the time series TS' of Fig. 3 is acquired over a period of time not overlapping with the time period over which the time series TS of Fig. 2 is acquired.

As clearly illustrated in Fig. 3, the temperature of each individual temperature reading of the entire time series TS' of Fig. 2 having 420 temperature readings varies within an interval between 48,1 and 51,8 degrees Celsius. Thus, all individual temperature readings of the entire time series TS varies as much as 3,7 degrees Celsius for a period of 2 minutes and 14 seconds. It is further clearly illustrated in Fig. 3 that the temperature variations along the X-axis are of different magnitudes at various points. When studying Fig. 3, it is clear that local temperature variations are the greatest between approximately 0 mm and 250 mm along the length of the fiber Bragg grating 124. It is also clear the temperature at approximately 150 mm varies to the greatest extent for the time series TS'. Thus, the local temperature difference between the respective spatial temperature distributions TD1 '-TD7' is the greatest at approximately 150 mm. In other words, the temperature variations along the length of the fiber Bragg grating 124 are clearly not uniform. However, when studying Fig. 3, it is also clear that local temperature variations are relatively small between approximately 250 mm and 600 mm along the length of the fiber Bragg grating 124.

The time series TS' of Fig. 3, which has a maximum temperature variation of no less than 3,7 degrees Celsius for a period of 2 minutes and 14 seconds is indicative of abnormal operating conditions in the vessel 102. In practice, it may be concluded that abnormal operating conditions in the vessel 102 are present since there are relatively large temperature variations between approximately 0 mm and 250 mm along the length of the fiber Bragg grating 124. On the other hand, is may also be concluded that normal operating conditions in the vessel 102 are likely to prevail, at the same time, between approximately 250 mm and 600 mm along the length of the fiber Bragg grating 124, where the temperature variations are relatively small.

In practice, the relatively large temperature variation between approximately 0 mm and 250 mm along the length of the fiber Bragg grating 124 indicates that the particulate food material 150 is less well fluidized in the vessel or even de-fluidized. When the particulate food material 150 is less well fluidized or de-fluidized in the vessel 102, the heat cannot be efficiently distributed throughout the vessel 102, e.g. since the particulate food material 150 locally or globally becomes stationary while typically forming so-called rat holes through which hot air may escape.

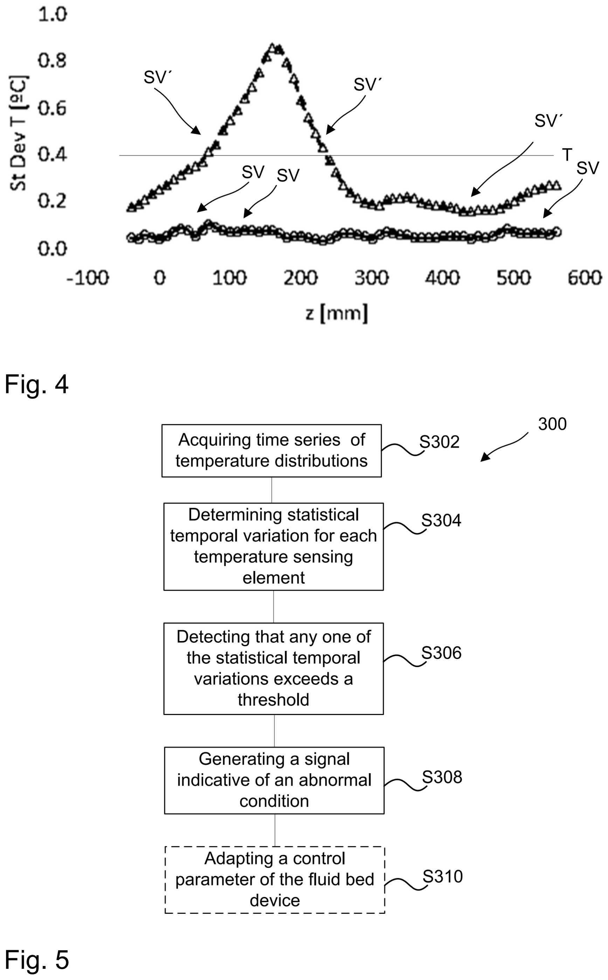

Although relevant conclusions regarding the operating conditions in the vessel 102 may be drawn from reviewing time series TS, TS' like the ones depicted in Fig. 2 and 3, the applicant has further realized that abnormal operating conditions in the vessel 102 may be more accurately detected, and even automatically by the processing device 130. To this end, a temporal variation SV, SV' (depicted in Fig. 4) of the temperature readings of the respective temperature sensing elements 122 may be determined from the time series TS, TS' of temperature distributions TD1-TD7, TD1'-TD7', for each temperature sensing element 122. It may then be detected whether any one of the temporal variations SV, SV' exceeds a threshold T. Followingly, a signal indicative of an abnormal operating condition in the vessel 102 may be generated by the processing device 130 in response to detecting that at least one of the temporal variations SV, SV' exceeds the threshold T. How this may be done will be further explained below while referring to Fig. 4.

Now turning to Fig. 4. Fig 4. illustrates temporal variations SV for the time series TS of Fig. 2, of the temperature readings of the respective temperature sensing elements 122 of the fiber Bragg grating 124 used to acquire the time series TS. The illustrated temporal variations SV depicted in Fig. 4 are a respective standard deviation for the temperature readings of the respective temperature sensing elements 122 of the fiber Bragg grating 124 used to acquire the time series TS. In other words, Fig. 4 illustrates local standard deviations over time plotted against corresponding distances along the fiber Bragg grating 124 used to acquire the time series TS. As is clearly illustrated in Fig. 4, the temporal variations SV, in the form of the standard deviations, for the time series TS of Fig. 2 are all below 0,1. Thus, the standard deviations of the temperature readings of the respective temperature sensing elements 122 of the fiber Bragg grating 124 used to acquire the time series TS are relatively small and moreover roughly the same throughout the length of the fiber Bragg grating 124. In other words, the standard deviations of the temperature readings along the entire X-axis are relatively small and roughly the same.

Fig 4. further illustrates temporal variations SV' for the time series TS' of Fig. 3, of the temperature readings of the respective temperature sensing elements 122 of the fiber Bragg grating 124 used to acquire the time series TS'. Similarly to what has been explained above, the illustrated temporal variations SV' depicted in Fig. 4 are a respective standard deviation for the temperature readings of the respective temperature sensing elements 122 of the fiber Bragg grating 124 used to acquire the time series TS'. In other words, Fig. 4 illustrates local standard deviations over time plotted against corresponding distances along the fiber Bragg grating 124 used to acquire the time series TS'. As is clearly illustrated in Fig. 4, the temporal variations SV', in the form of the standard deviations, for the time series TS' of Fig. 3 vary greatly along the X-axis. Further, as clearly illustrated in Fig. 4, temporal variations SV', in the form of the standard deviations, vary between approximately 0,15 and 0,9. That is the standard deviations of temperature readings of the respective temperature sensing elements 122 of the fiber Bragg grating 124 used to acquire the time series TS' vary greatly along the length of the fiber Bragg grating 124. Further, as clearly illustrated in Fig. 4, the standard deviation peaks with a magnitude of about 0,9 at approximately 150 mm where the temperature readings vary to the greatest extent for the time series TS'. Thus, not only the local temperature difference between the respective spatial temperature distributions TD1'-TD7' is the greatest at approximately 150 mm but also the temporal variation SV', in the form of the standard deviation of the temperature readings.

In practice, the processing device 130 of Fig. 1 is configured to determine, from the time series TS, TS' of temperature distributions TD1-TD7, TD1'-TD7', for each temperature sensing element 122, a temporal variation SV, SV' of the temperature readings of the respective temperature sensing element 122.

The Applicant has realized that an efficient way to detect an abnormal operating condition in the vessel 102, is to determine whether any one of the temporal variations SV, SV' exceeds a threshold T. In Fig. 4 it is illustrated how a threshold T corresponding to a temporal variation SV, SV' in the form of a standard deviation of 0,4 is applied to or compared to the temporal variations SV, SV' determined from the time series TS of Fig. 2 and the time series TS' of Fig. 3 respectively.

As clearly illustrated in Fig. 4, all temporal variations SV, in form of the standard deviations, for the time series TS of Fig. 2 are all well below the threshold T corresponding to a standard deviation of 0,4. Thus, none of the temporal variations SV, in form of the standard deviations, for the time series TS of Fig. 2 exceeds the threshold T, which in practice is indicative of normal operating conditions in the vessel 102 as have been explained above.

Further, as clearly illustrated in Fig. 4, a plurality of temporal variations SV', in form of the standard deviations, for the time series TS' of Fig. 3 are all above the threshold T corresponding to a standard deviation of 0,4. Thus, a plurality of temporal variations SV, in form of the standard deviations, for the time series TS' of Fig. 3 exceeds the threshold T, which in practice is indicative of abnormal operating conditions in the vessel 102 as have been explained above. In practice, the temporal variations SV', in form of the standard deviations, pertaining to positions between approximately 40 mm and 250 mm along the length of the fiber Bragg grating 124 all exceed the threshold T. Thus, no fewer than approximately 21 different temporal variations SV', in form of the standard deviations, exceed the threshold T which is clearly indicative of abnormal operating conditions in the vessel 102.

In practice, the processing device 130 of Fig. 1 is configured to detect whether any one of the temporal variations SV, SV' exceeds the threshold T.

In practice, the processing device 130 of Fig. 1 is configured to generate a signal indicative of an abnormal operating condition in the vessel 102, in response to detecting that at least one of the temporal variation SV, SV' exceeds the threshold T. To this end, the processing device 130 may be configured to generate any type of signal, machine and/or human comprehensible. For instance, the signal may include triggering an alarm, e.g. visual or audible signal, to alert an operator. For instance, the signal may alert a control system used to control the fluid bed device 100 and/or the spray dryer 200.

Further, the processing device 130 may be further configured to adapt a control parameter of the fluid bed device 100 in response to receiving such signal. In this regard, according to an example, an airflow generated by the fluidization unit 108 to may be adjusted to correct fluidization levels in the vessel. According to another example, temperature settings of heating elements may be adjusted to maintain optimal processing conditions in the vessel. According to another example, the feed rate of particulate food material 150 into the fluid bed device 100 may be adapted to ensure consistent material flow of the particulate food material 150 into and/or out of the vessel. According to another example, a vibration settings of the fluidization unit 108 may be adjusted to redistribute the particulate food material 150 in the vessel 102 and prevent clumping.

However, if a single temporal variation SV' were to exceed the threshold T this would most likely be indicative of a faulty temporal variation SV'. Such faulty temporal variation SV' may for example be attributable to a faulty sensing element. Correspondingly, if a number of isolated temporal variations SV' were to exceed the threshold T this would most likely be indicative of faulty temporal variations SV'. In this regard, "isolated" may mean that no neighboring or spatially close temporal variations SV' exceed the threshold. In such situations, it may still be assumed that normal operating conditions prevail in the vessel 102 meaning that no signal indicative of an abnormal operating condition in the vessel 102 is generated.

Above, it has been explained how temporal variations SV, SV' in form of standard deviations of may be used in combination with a threshold T of 0,4 to efficiently detect or determine one or more abnormal operating conditions in the vessel 102. In practice, such temporal variations may be used to detect or determine changes or transitions of the operating conditions at an early stage when such changes or transitions otherwise may be hard or even impossible to realize.

It is, however, understood that the temporal variations SV, SV' determined from the time series TS, TS', and subsequently used for detecting if any one of the temporal variations SV, SV' exceeds a threshold T, are by no means limited to using standard deviation as have been explained above. Quite the contrary, any type of temporal variations SV, SV' may be used to advantage. To this end, the temporal variations SV, SV' may apart from a standard deviation include variance, rate of change, variation in magnitude, variation in frequency, pattern-wise variation, trend-wise variation, volatility or anomaly in temperature change. Moreover, the temporal variations SV, SV' may include an average. In fact, any type of suitable moving statistical measure may be used.

It is further understood that any suitable threshold T may be used. For natural reasons, the type and magnitude of threshold will vary depending on the type of temporal variations SV, SV' determined and compared with the threshold. Moreover, different thresholds T may be suitable for different types of particulate food materials 150 even if the same fluid bed device 100 is used.

Further, different thresholds T may be used for different temporal variations SV, SV' to e.g. compensate for inherent irregularities of the temperature of the particulate food material 150 in the vessel 102. Further, a set of discrete thresholds T may be used. Further, the threshold T may be described by a function and consequently vary for temperature readings pertaining to different temperature sensing elements 122 of the temperature sensor arrangement 120.

Further, it is understood that the above described principles for detecting or determining an abnormal operating condition in the vessel 102 are applicable for all configurations of the temperature sensor arrangement 120 as described above in conjunction with Fig. 1. Thus, the above described principles for detecting or determining an abnormal operating condition in the vessel 102 is applicable when the temperature sensor arrangement 120 is arranged in the vessel 102. Thus, the above described principles for detecting or determining an abnormal operating condition in the vessel 102 are applicable when the temperature sensor arrangement 120 is arranged on the exterior surface 104 the vessel 102. Thus, the above described principles for detecting or determining an abnormal operating condition in the vessel 102 are applicable when the temperature sensor arrangement 120 is arranged partially in the vessel 102 and partially on the exterior surface 104 the vessel 102. In this regard, minor modifications of parameters may, however, by advantageous or required as applicable.

Now turning to Fig. 5. Fig. 5 is a flow chart of a method 300 for monitoring a fluid bed device 100. The fluid bed device 100 comprises a vessel 102 configured to receive a particulate food material 150 to be fluidized. The fluid bed device 100 further comprises a temperature sensor arrangement 120 comprising a set of spatially distributed temperature sensing elements 122 configured to sense a spatial temperature distribution TD1-TD7, TD1'-TD7' of the particulate food material 150, wherein the spatial temperature distribution TD1-TD7, TD1'-TD7' comprises a temperature reading of each temperature sensing element 122.

The method 300 starts by acquiring S302, by a processing device 130, a time series TS, TS' of temperature distributions TD1-TD7, TD1'-TD7' from the temperature sensor arrangement 120.

The method 300 proceeds by determining S304, by the processing device 130, from the time series TS, TS' of temperature distributions TD1-TD7, TD1'-TD7', for each temperature sensing element 122, a temporal variation SV, SV' of the temperature readings of the respective temperature sensing element 122.

The method 300 proceeds by detecting S306, by the processing device 130, whether any one of the temporal variations SV, SV' exceeds a threshold T.

The method 300 proceeds by, in response to the processing device 120 detecting that at least one of the temporal variations SV, SV' exceeds the threshold T, generating S308, by the processing device 130, a signal indicative of an abnormal operating condition in the vessel 102.

The method 300 may optionally proceed by, adapting S310, by the processing device 130, a control parameter of the fluid bed device 100 in response to receiving the signal.

Thus, by the method 300, a fluid bed system 100 of the above described kind may be monitored.

According to further embodiments, the fluid bed device and the method for monitoring a fluid bed device may incorporate one or more of the following features:
The spatially distributed temperature sensing elements 122 may be arranged at substantially equidistant intervals along a horizontal plane HP of the vessel 102.

As used herein, the term "substantially" refers to a tolerance of ±10%, or ±5% of the value in question, unless otherwise specified. For example, a set of temperature sensing elements arranged at substantially equidistant intervals may deviate by up to 10% from the nominal spacing between adjacent elements.

The temperature sensor arrangement 120 may have all its sensing elements extending along a continuous length, which may follow a straight or curved path. Each sensing element may be positioned along the horizontal plane HP, which intersects a fluidized region of the particulate food material 150.

The processing device 130 may be configured to generate data indicative of temperature as a function of the spatial position of each sensing element along the length of the sensor, thereby forming spatial temperature distribution data (compare Figs 2 to 4). The shape of this curve may be used to assess fluid bed performance, including identifying zones of de-fluidization or uneven thermal behavior. It has proven particularly good in detecting the presence of the so-called rat holes through which hot air may escape.

From the description above follows that, although various embodiments of the invention have been described and shown, the invention is not restricted thereto but may also be embodied in other ways within the scope of the subject-matter defined in the following claims.

## Claims

1. A fluid bed device (100) comprising:
a vessel (102) configured to receive a particulate food material (150) to be fluidized,
a temperature sensor arrangement (120) comprising a set of spatially distributed temperature sensing elements (122) configured to sense a spatial temperature distribution (TD1-TD7, TD1'-TD7') of the particulate food material (150), wherein the spatial temperature distribution (TD1-TD7, TD1'-TD7") comprises a temperature reading of each temperature sensing element (122), and
a processing device (130) configured to;
acquire a time series (TS, TS') of temperature distributions (TD1-TD7, TD1'-TD7') from the temperature sensor arrangement (120),
determine, from the time series (TS, TS') of temperature distributions (TD1-TD7, TD1'-TD7'), for each temperature sensing element (122), a temporal variation (SV, SV') of the temperature readings of the respective temperature sensing element (122),
detect whether any one of the temporal variations (SV, SV') exceeds a threshold (T), and
in response to detecting that at least one of the temporal variation (SV, SV') exceeds the threshold (T), generate a signal indicative of an abnormal operating condition in the vessel (102).

2. The fluid bed device (100) according to claim 1, wherein the temporal variation (SV) comprises a standard deviation, a variance, a variation in rate, a variation in magnitude, a variation in frequency, a pattern-wise variation, a trend-wise variation, a volatility or an anomaly in temperature change.

3. The fluid bed device (100) according to claim 1 or 2, wherein the abnormal condition corresponds to a de-fluidized state of the particulate food material (150) in at least a portion of the vessel (102).

4. The fluid bed device (100) according to any one of the preceding claims, wherein the set of spatially distributed temperature sensing elements (122) are arranged in the vessel (102) and configured to extend longitudinally into fluidized particulate food material (150) in the vessel (102).

5. The fluid bed device (100) according to any one of claim 1-3, wherein the set of spatially distributed temperature sensing elements (122) are arranged on an exterior surface (104) of the vessel (102).

6. The fluid bed device (100) according to any one of claim 1-3, wherein a first subset (122a) of the set of spatially distributed temperature sensing elements (122) are arranged in the vessel (102), and wherein a second subset (122b) of the set of spatially distributed temperature sensing elements (122) are arranged on an exterior surface (104) of the vessel (102).

7. The fluid bed device (100) according to any one of the preceding claims, wherein the temperature sensor arrangement (120) comprises a fiber Bragg grating (124).

8. The fluid bed device (100) according to claim 7, wherein the fiber Bragg grating (124) extends along a linear path or along a curved path.

9. The fluid bed device (100) according to any one of the preceding claims, wherein the temperature sensor arrangement (120) comprises a first fiber Bragg grating (124) extending along a first path and a second fiber Bragg grating (124) extending along a second path.

10. The fluid bed device (100) according to claim 9, wherein the first and/or second path is a linear path, extending along a horizontal plane (HP) of the vessel (102).

11. The fluid bed device (100) according to claim 9, wherein the first and/or second path is a curved path, extending along a horizontal plane (HP) of the vessel (102).

12. The fluid bed device (100) according to any one of the preceding claims, wherein the processing device (130) is further configured to adapt a control parameter of the fluid bed device (100) in response to receiving the signal.

13. The fluid bed device (100) according to any one of the preceding claims, wherein particulate food material (150) is milk powder or baby formula.

14. A method (300) for monitoring a fluid bed device (100), the fluid bed device (100) comprising: a vessel (102) configured to receive a particulate food material (150) to be fluidized, and a temperature sensor arrangement (120) comprising a set of spatially distributed temperature sensing elements (122) configured to sense a spatial temperature distribution (TD1-TD7, TD1'-TD7') of the particulate food material (150), wherein the spatial temperature distribution (TD1-TD7, TD1'-TD7') comprises a temperature reading of each temperature sensing element (122), the method (300) comprising:
acquiring (S302), by a processing device (130), a time series (TS, TS') of temperature distributions (TD1-TD7, TD1'-TD7') from the temperature sensor arrangement (120),
determining (S304), by the processing device (130), from the time series (TS, TS') of temperature distributions (TD1-TD7, TD1'-TD7'), for each temperature sensing element (122), a temporal variation (SV, SV') of the temperature readings of the respective temperature sensing element (122),
detecting (S306), by the processing device (130), whether any one of the temporal variations (SV, SV') exceeds a threshold (T), and
in response to the processing device (130) detecting that at least one of the temporal variations (SV, SV') exceeds the threshold (T), generating (S308), by the processing device (130), a signal indicative of an abnormal operating condition in the vessel (102).

15. The method (300) according to claim 14, further comprising adapting (S310), by the processing device (130), a control parameter of the fluid bed device (100) in response to receiving the signal.
